(19)

Europäisches
Patentamt
European
Patent Office
Office européen
des brevets

(11) **EP 3 051 617 A1**

(12) **EUROPEAN PATENT APPLICATION**
published in accordance with Art. 153(4) EPC

(43) Date of publication:
**03.08.2016 Bulletin 2016/31**

(51) Int Cl.:
*H01M 8/24* (2006.01)    *H01M 8/02* (2006.01)
*H01M 8/12* (2006.01)

(21) Application number: **14849844.7**

(22) Date of filing: **17.09.2014**

(86) International application number:
**PCT/JP2014/074570**

(87) International publication number:
**WO 2015/045986 (02.04.2015 Gazette 2015/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **24.09.2013 JP 2013196731**

(71) Applicant: **Murata Manufacturing Co., Ltd.
Nagaokakyo-shi, Kyoto 617-8555 (JP)**

(72) Inventors:
• **TOMOSHIGE, Yosuke
Nagaokakyo-shi
Kyoto 617-8555 (JP)**

• **MIZUKAMI, Kimihiro
Nagaokakyo-shi
Kyoto 617-8555 (JP)**
• **HIRAI, Tomoaki
Nagaokakyo-shi
Kyoto 617-8555 (JP)**

(74) Representative: **Reeve, Nicholas Edward
Reddie & Grose LLP
16 Theobalds Road
London WC1X 8PL (GB)**

(54) **SOLID OXIDE FUEL CELL STACK AND METHOD FOR MANUFACTURING SAME**

(57)     Provided are a solid oxide fuel cell stack and a manufacturing method therefor, which can suppress interlayer peeling when a thermal cycle is applied, thereby providing enhanced reliability in electrical connection.

A solid oxide fuel cell stack 1 with a plurality of fuel cells 2 stacked, where in a part with the fuel cells 2, 2 stacked on one another, a metallic layer 11 is disposed between one fuel cell 2 and the other fuel cell 2, and a conductive material is disposed between the metallic layer 11 and the fuel cell 2 to electrically connect the metallic layer 11 and the fuel cell 2, and the fuel cells 2, 2 are joined with adhesive layers 15a to 15c including an adhesive cured product in a region other than the region with the metallic layer 11 and conductive material provided.

FIG. 1

**Description**

TECHNICAL FIELD

The present invention relates to a solid oxide fuel cell stack with a plurality of solid oxide fuel cells stacked, and a manufacturing method therefor.

BACKGROUND ART

Conventionally, various solid oxide fuel cells that use solid oxide electrolytes have been proposed. The solid oxide fuel cells have a plurality of fuel cells stacked in order to achieve adequate voltages. Thus, fuel cell stacks are configured. Patent Document 1 below discloses a fuel cell stack composed of a plurality of plate-type fuel cells stacked, which use a ceramic. When thermal stress is applied, there is a possibility that defective conduction by cell deformation of the fuel cell will be caused in the fuel cell stack. In Patent Document 1, one end and/or the other end along the stacking direction is provided with a cell following deformation part. Thus, an attempt to suppress defective conduction is made when a thermal cycle is applied.

PRIOR ART DOCUMENTS

PATENT DOCUMENTS

    Patent Document 1: WO 2010/038869
    Patent Document 2: Japanese Patent Application Laid-Open No. 2006-310005

SUMMARY OF THE INVENTION

Problem to be solved by the invention

Ceramics are relatively low in thermal conductivity. Thus, with the increased number of stacked fuel cells using a ceramic, heat generated by power generation becomes more likely to be accumulated around the center of the fuel cell stack. Therefore, there is a possibility that a heat distribution will be produced at the surfaces of the fuel cells to cause the cells to be broken by thermal stress.

On the other hand, as described in Patent Document 2, a method is also known in which inhomogeneity of heat distribution is reduced by disposing metallic layers such as metallic films or metallic plates between cells. In this case, the effect produced by thermal stress can be reduced. However, there is a significant difference in coefficient of thermal expansion between the metal and the ceramic, and there is thus a possibility of causing peeling between the metal and the ceramic, or breakage of the cell part composed of the ceramic.

An object of the present invention is to provide a solid oxide fuel cell stack and a manufacturing method therefor, which can suppress interlayer peeling when a thermal cycle is applied, thereby providing enhanced reliability in electrical connection.

Means for solving the problem

A solid oxide fuel cell stack according to the present invention has a structure with a plurality of fuel cells stacked. The solid oxide fuel cell stack according to the present invention includes: a plurality of solid oxide fuel cells stacked; a metallic layer disposed between one of the fuel cells and the other in a part with the fuel cells stacked one another; a conductive material disposed between the metallic layer and the fuel cell to electrically connect the metallic layer and the fuel cell; and an adhesive layer including an adhesive cured product, which joins the plurality of fuel cells in a region other than a region with the metallic layer and conductive material provided.

In a specific aspect of the solid oxide fuel cell stack according to the present invention, the adhesive cured product is cured and shrunk.

In another specific aspect of the solid oxide fuel cell stack according to the present invention, the conductive material includes a conductive ceramic or a metal.

In yet another specific aspect of the solid oxide fuel cell stack according to the present invention, the conductive material includes a porous conductive ceramic.

Preferably, the conductive ceramic is a fired body layer with a neck specific surface area ratio of 10% or less, which has not been completely sintered.

In yet another specific aspect of the solid oxide fuel cell stack according to the present invention, the conductive ceramic includes a completely sintered dense layer and a fired body layer with a neck specific surface area ratio of 10% or less, which has not been completely sintered.

In another specific aspect of the solid oxide fuel cell stack according to the present invention, the dense layer is disposed at least one of between the fuel cell and the fired body layer with a neck specific surface area ratio of 10% or less, and between the metallic layer and the fired body layer with a neck specific surface area ratio of 10% or less.

In yet another specific aspect of the solid oxide fuel cell stack according to the present invention, the dense layer is disposed at least between the fuel cell and the fired body layer with a neck specific surface area ratio of 10% or less.

In yet another specific aspect of the solid oxide fuel cell stack according to the present invention, the conductive ceramic is at least one conductive ceramic selected from the group consisting of $LaSrMnO_3$, $LaSrCoO_3$, $LaSrCoFeO_3$, $MnCoO_3$, $SmSrCoO_3$, $LaCaMnO_3$, $LaCaCoO_3$, $LaCaCoFeO_3$, $LaNiFeO_3$, and $(LaSr)_2NiO_4$.

In the solid oxide fuel cell stack according to the present invention, preferably the metallic layer has a plate-like shape.

In yet another specific aspect of the solid oxide fuel cell stack according to the present invention, the metallic layer includes a metallic material with a plurality of holes.

In yet another specific aspect of the solid oxide fuel cell stack according to the present invention, the metallic layer is a metallic mesh.

In yet another specific aspect of the solid oxide fuel cell stack according to the present invention, the conductive material includes a metallic material containing a metal element constituting the metallic layer.

In yet another specific aspect of the solid oxide fuel cell stack according to the present invention, the conductive material includes one metallic material selected from the group consisting of a metallic mesh, a metallic foam, and a porous metal.

A method for manufacturing a solid oxide fuel cell stack according to the present invention includes the steps of: preparing a plurality of fuel cells; and joining the plurality of fuel cells by sandwiching, between the fuel cells adjacent to each other in a stacking direction, a metallic layer and a pair of conductive materials disposed on both sides of the metallic layer, along with a cured and shrunk adhesive in a region other than a region with the metallic layer provided.

Advantageous effect of the invention

In accordance with the solid oxide fuel cell stack and manufacturing method therefor according to the present invention, the plurality of fuel cells is joined with the adhesive layer including the adhesive cured product in the region other than the region with the metallic layer and conductive material provided. Accordingly, with the cure shrinkage force generated during curing of the adhesive, the metallic layer and the conductive material are strongly sandwiched by the fuel cells on both sides. Therefore, even when thermal stress is applied, peeling can be effectively suppressed between the metallic layer and the conductive material, and between the metallic layer and conductive material and the fuel cells. In addition, reliability in electrical connection can be enhanced.

BRIEF EXPLANATION OF DRAWINGS

FIG. 1 is a schematic elevational cross-sectional view illustrating a main part of a fuel cell stack according to a first embodiment of the present invention.

FIG. 2 is an exploded perspective view of one fuel cell for use in the fuel cell stack according to the first embodiment of the present invention.

FIG. 3 is a plan view of one fuel cell for use in the fuel cell stack according to the first embodiment.

FIG. 4 is a perspective view schematically illustrating a part of the fuel cell stack according to the first embodiment.

FIG. 5 is an electron micrograph showing a conductive material that uses an LSM powder of 7 $m^2$/g in specific surface area (BET method), after being subjected to the same heat treatment as that under a condition for stack preparation.

FIG. 6 is an electron micrograph showing a conductive material that uses an LSM powder of 11 $m^2$/g in specific surface area (BET method), after being subjected to the same heat treatment as that under a condition for stack preparation.

FIG. 7 is a diagram showing the relationships between a current density in a fuel cell stack according to an example and a cell voltage per stage, and between a current density and a cell voltage for a single fuel cell according to a comparative example.

FIG. 8 is a diagram showing the relationship between a current density for a fuel cell stack according to a second embodiment and a cell voltage per stage.

FIG. 9 is a partially notched plan view of conductive material for use in a fuel cell stack according to a third embodiment of the present invention.

FIG. 10 is a schematic elevational cross-sectional view of a fuel cell stack according to a fourth embodiment of the present invention.

FIG. 11 is a partially notched elevational cross-sectional view illustrating a main part of a fuel cell stack according to a fifth embodiment of the present invention.

FIG. 12 is a partially notched elevational cross-sectional view illustrating a main part of a fuel cell stack according to a sixth embodiment of the present invention.

FIG. 13 is an elevational cross-sectional view of a fuel cell stack according to a seventh embodiment of the present invention.

FIG. 14 is a pattern diagram for explaining a neck surface area.

MODE FOR CARRYING OUT THE INVENTION

With reference to the drawings, specific embodiments of the present invention will be described, thereby clarifying the present invention.

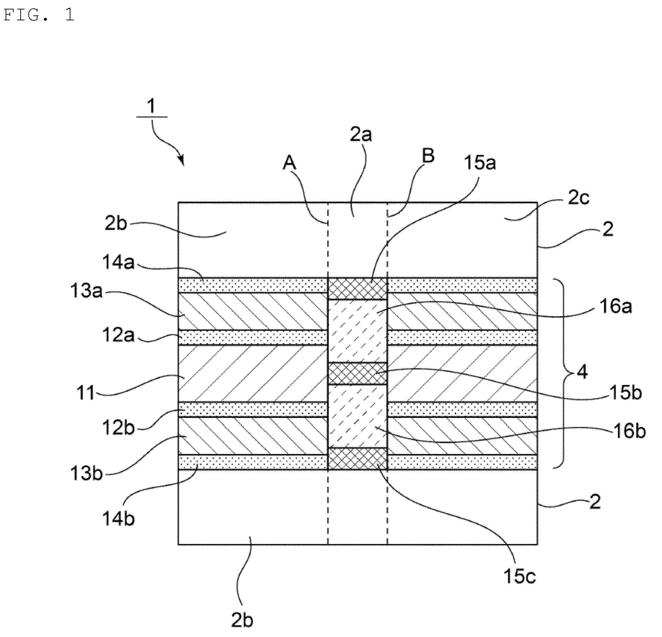

FIG. 1 is a schematic elevational cross-sectional view of a fuel cell stack according to a first embodiment of the present invention. The fuel cell stack 1 has an upper fuel cell 2 and a lower fuel cell 2 with a joint part 4 interposed therebetween. While the two fuel cells 2, 2 are shown in FIG. 1, the structure of the both fuel cells 2, 2 stacked with the joint part 4 interposed therebetween is further included in the present embodiment.

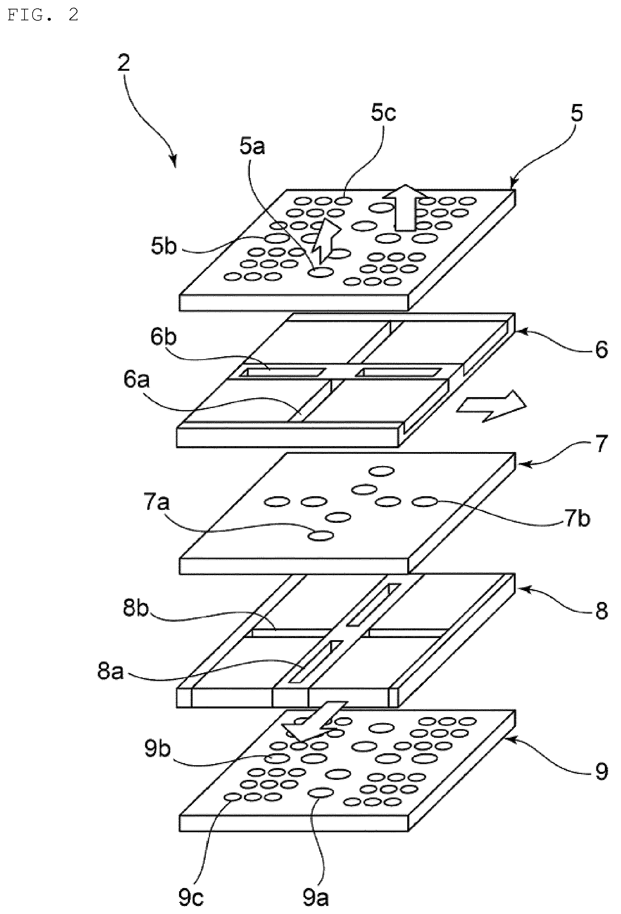

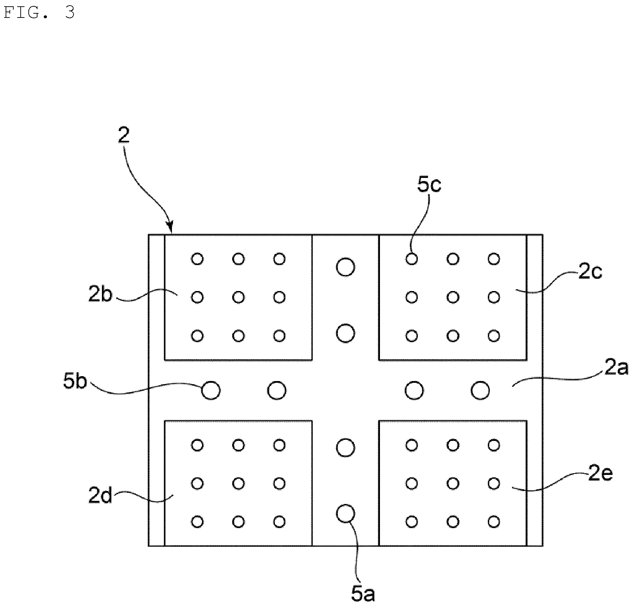

In addition, in FIG. 1, the fuel cells 2,2 are illustrated schematically only in terms of placement location. With reference to FIGS. 2 and 3, a detailed description of one fuel cell 2 will be given.

As shown in FIG. 2, the fuel cell 2 has a solid oxide electrolyte layer 7.

The solid oxide electrolyte layer 7 is composed of a highly ion conductive ceramic. Such materials can include, for example, stabilized zirconia and partially stabilized zirconia. More specifically, the materials include zirconia stabilized with yttrium or scandium. Examples of the stabilized zirconia can include, for example, 10 mol% yttria stabilized zirconia (10YSZ) and 11 mol% scandia stabilized zirconia (11ScSZ).

Examples of the partially stabilized zirconia can include, for example, 3 mol% yttria partially stabilized zirconia (3YSZ).

It is to be noted that the material constituting the solid oxide electrolyte layer 7 is not limited to the foregoing, but may be formed from a ceria based oxide doped with Sm or Gd, a perovskite oxide such as $La_{0.8}Sr_{0.2}Ga_{0.8}Mn_{0.2}O_{(3-\delta)}$, etc. It is to be noted that $\delta$ represents a positive number less than 3.

The solid oxide electrolyte layer 7 is provided with through holes 7a and through holes 7b. The through holes 7a constitute a fuel gas flow passage. The through holes 7b constitute an air flow passage through which air as an oxidant gas passes.

Above the solid oxide electrolyte layer 7, a fuel electrode layer 6 is stacked. The fuel electrode layer 6 can be composed of yttria stabilized zirconia containing Ni, scandia stabilized zirconia containing Ni, or the like. The fuel electrode layer 6 is provided with slits 6a constituting a fuel gas flow passage and slits 6b constituting an air flow passage.

On the fuel electrode layer 6, a separator 5 is stacked. The separator 5 can be formed from stabilized zirconia, partially stabilized zirconia, or the like. The separator 5 has through holes 5a, 5b formed therein. The through holes 5a constitute a fuel gas flow passage. The through holes 5b constitute an air flow passage.

On the other hand, the separator 5 is provided with a plurality of interconnectors 5c for extracting electricity so as to penetrate from the upper surface of the separator 5 to the lower surface thereof. More specifically, each interconnector 5c is formed from a via hole conductor. The plurality of interconnectors 5c is electrically connected to the fuel electrode layer 6.

On the other hand, an air electrode layer 8 and a separator 9 are stacked below the solid oxide electrolyte layer 7. The air electrode layer 8 is provided with slits 8a constituting a fuel gas flow passage and slits 8b constituting an air flow passage. The air electrode layer 8 is preferably composed of a highly electron-conductive and porous material. This air electrode layer 8 can be formed from, for example, scandia stabilized zirconia (ScSZ), ceria doped with Gd, an indium oxide doped with Sn, a $PrCoO_3$ based oxide, a $LaCoO_3$ based oxide, or a $LaMoO_3$ based oxide. Examples of the $LaMoO_3$ based oxide include, for example, $La_{0.8}Sr_{0.2}MnO_3$ (hereinafter, abbreviated as LSM) and $La_{0.6}Ca_{0.4}MnO_3$ (hereinafter, abbreviated s LCM).

The separator 9 is configured as with the separator 5. Therefore, the separator 9 has through holes 9a constituting a fuel gas flow passage, through holes 9b constituting an air flow passage, and a plurality of interconnectors 9c.

FIG. 3 shows a plan view of the single fuel cell 2. As shown in FIG. 3, the fuel cell 2 has, in plan view, a cross-shaped flow passage constitution part 2a, and four power generation parts 2b, 2c, 2d, 2e separated by the flow passage constitution part 2a. Further, the upper surfaces of the power generation parts 2b to 2e have the interconnectors 5c exposed.

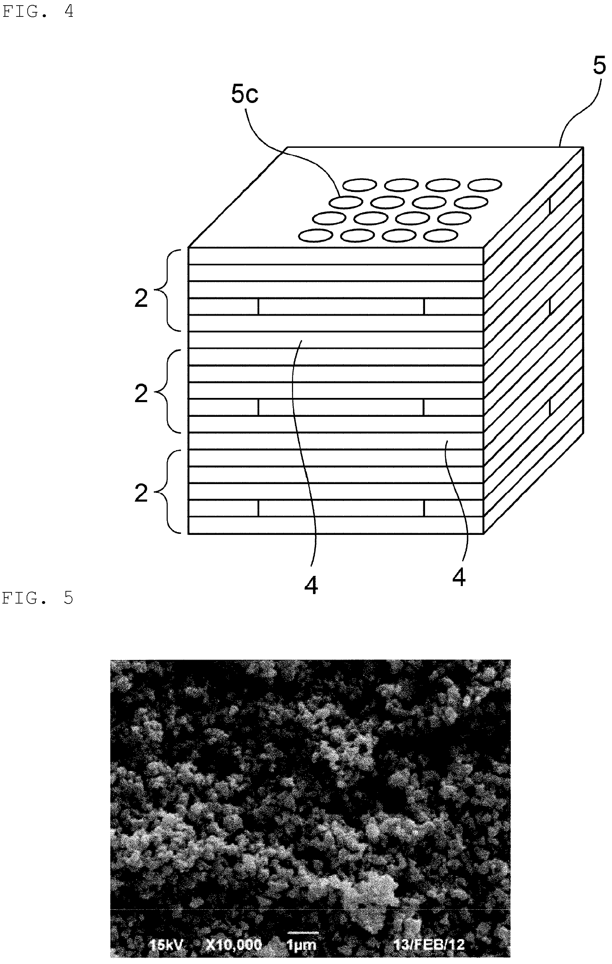

Returning to FIG. 1, the fuel cell stack 1 according to the present embodiment has such a plurality of fuel cells 2 stacked. FIG. 4 is a perspective view illustrating a part of the fuel cell stack 1. The part corresponds to stacked power generation parts 2b, 2c, 2d, or 2e separated by the cross-shaped flow passage constitution part 2a shown in FIG. 3. As shown in FIG. 4, fuel cells 2, 2, 2 are stacked with joint parts 4, 4 interposed therebetween. It is to be noted that in fact, the power generation parts 2b, 2c are located on both sides of the flow passage constitution part 2a as shown in FIG. 1.

Referring to FIG. 1, a feature of the fuel cell stack 1 according to the present embodiment is the configuration of the joint part 4 joining the fuel cell 2 and the fuel cell 2.

The joint part 4 physically joins and integrates the upper fuel cell 2 and the lower fuel cell 2, and electrically connects the upper fuel cell 2 and the lower fuel cell 2 in series.

In FIG. 1, a part of the fuel cell 2 indicated between dashed lines A, B corresponds to the flow passage constitution part 2a. The power generation parts 2b, 2c are located on both sides of the flow passage constitution part 2a. Further, in order not to centrally concentrate heat, and in order to electrically connect the upper fuel cell 2 and the lower fuel cell 2, a metallic layer 11 is provided.

The metallic layer 11 is composed of a metallic plate in the present embodiment. As the material constituting the metallic plate, which is not particularly limited, it is desirable to use a metal that is close in coefficient of thermal expansion to the ceramic constituting the fuel cell 2. Such a material is preferably ferrite-based stainless steel. The ferrite-based stainless steel is close in coefficient of thermal expansion to zirconia. In addition, the ferrite-based stainless steel is excellent in heat resistance. Accordingly, the ferrite-based stainless steel is particularly preferred.

At the same time, the material constituting the metallic layer 11 is not particularly limited, but other metals may be used.

The upper surface and lower surface of the metallic layer 11 are provided with conductive layers 12a, 12b composed of LSM, respectively. The conductive layers 12a, 12b are composed of a cured product obtained by heat treatment of a conductive paste mainly containing an LSM powder.

Conductive material layers 13a, 13b composed of LSM sheets are provided outside the conductive layers 12a, 12b, respectively. The conductive material layers 13a, 13b are, as will be described later, formed with the use of an LSM containing composition which has not been completely sintered in a loading heat treatment step for obtaining the fuel cell stack 1. More specifically, a calcined powder with a specific surface area (BET method) of 7 $m^2$/g, which is an LSM powder represented by $(La_{0.8}Sr_{0.2})_{0.95}MnO_3$, is used in the present embodiment. Slurry obtained by mixing the calcined powder, a binder resin, and a solvent is subjected to sheet forming. The sheets obtained are stacked as shown in FIG. 1, and baked by loading heat treatment for after-mentioned stacking. In this way, the conductive material layers 13a, 13b which have not been sintered are formed as will be described later.

Conductive layers 14a, 14b composed in the same fashion as the conductive layers 12a, 12b are disposed on the outer surfaces of the conductive material layers 13a, 13b. The conductive layers 12a, 12b, the conductive material layers 13a, 13b, and the conductive layers 14a, 14b constitute a conductive material according to the present invention. This stacked structure joins and electrically connects the upper fuel cell 2 and the lower fuel cell 2.

The conductive material is desirably composed of a conductive ceramic such as LSM. As this conductive ceramic, at least one selected from the group consisting of $LaSrMnO_3$, $LaSrCoO_3$, $LaSrCoFeO_3$, $MnCoO_3$, $SmSrCoO_3$, $LaCaMnO_3$, $LaCaCoO_3$, $LaCaCoFeO_3$, $LaNiFeO_3$, and $(LaSr)_2NiO_4$ can be used in a preferred manner.

Alternatively, the conductive material may be formed from a metal.

In addition, in the present invention, the conductive material desirably contains the metal element constituting the metallic layer 11. Thus, the difference in coefficient of thermal expansion between the metallic layer 11 and the conductive material can be reduced.

In addition, the conductive material layers 13a, 13b and the conductive layers 12a, 12b, 14a, 14b are desirably composed of a porous conductive ceramic.

Furthermore, in the present embodiment, the joint part 4 has a stacked structure of adhesive layers 15a to 15c and spacers 16a, 16b in a separate region from the joint part electrically connecting the power generation parts 2b, 2c. In this regard, the spacers 16a, 16b are not necessarily provided, and when the distance between the fuel cells 2, 2 is large, it is desirable to use the spacers for ease of adhesion. As the material constituting these spacers 16a, 16b, a material is desired which is close in coefficient of thermal expansion to the ceramic constituting the fuel cell 2.

A further feature of the present embodiment is that the fuel cells 2, 2 are bonded by the adhesive layers 15a to 15c with the spacers 16a, 16b interposed therebetween. The adhesive layers 15a to 15c are composed of a glass-based adhesive in the present embodiment.

More specifically, a glass-based adhesive is used which mainly contains a glass ceramic.

Adhesives are typically shrunk during curing. More specifically, the adhesives are cured and shrunk. Therefore, when the fuel cell 2 and the fuel cell 2 are stacked with the joint part 4 interposed therebetween, the cure shrinkage force generated when the adhesive layers 15a to 15c finally turn into cured products will cause stress to act so that the upper fuel cell 2 is brought close to the lower fuel cell 2. Therefore, also between the power generation parts 2b, 2b and between the power generation parts 2c, 2c, stress will act so as to bring the power generation parts 2b, 2b close to each other and the power generation parts 2c, 2c close to each other.

Thus, in the fuel cell stack 1 obtained, stress remains which is caused by cure shrinkage of the adhesive layers 15a to 15c, and the joint part 4 can thus strongly join the fuel cells 2 to each other. Thus, even when thermal stress is applied to the fuel cell stack obtained, peeling is unlikely to be caused at the interfaces between the metallic layer 11 and the conductive layers 12a, 12b, the interfaces between the conductive material layer 13a and the conductive layers 12a, 14a, the interfaces between the conductive material layer 13b and the conductive layers 12b, 14b, or the interfaces between the conductive layers 14a, 14b and the power generation parts 2b, 2c. Accordingly, reliability in electrical connection can be effectively enhanced.

On the other hand, as previously described, in the present embodiment, the conductive material layers 13a, 13b are composed of LSM sheets which have not been sintered in a loading heat treatment step of joining the fuel cells 2, 2. For the conductive material layers 13a, 13b, an LSM powder is used which has a specific surface area (BET method) of 7 m$^2$/g. On the other hand, the conductive layers 12a, 12b, 14a, 14b have been formed from a conductive paste using an LSM powder with a relatively large specific surface area of 11 m$^2$/g, which has been obtained by calcination.

There is a need for the conductive paste or conductive slurry using an LSM powder with a smaller specific surface area (BET method) to be subjected to main firing at a higher temperature. More specifically, the conductive paste or slurry has not been sintered at lower temperatures.

In the present embodiment, the conductive material layers 13a, 13b have not been sintered at the temperature for the heating treatment step of stacking the fuel cells 2, 2 on one another and applying a load to join the cells. FIG. 5 is an electron micrograph showing the surface condition of the sheet using the LSM powder of 7 m$^2$/g in specific surface area (BET method), which is obtained when the sheet is subjected to treatment at the loading heat treatment temperature. As shown by the electron micrograph in FIG. 5, it is determined that the shape of the LSM powder remains with almost no necking caused.

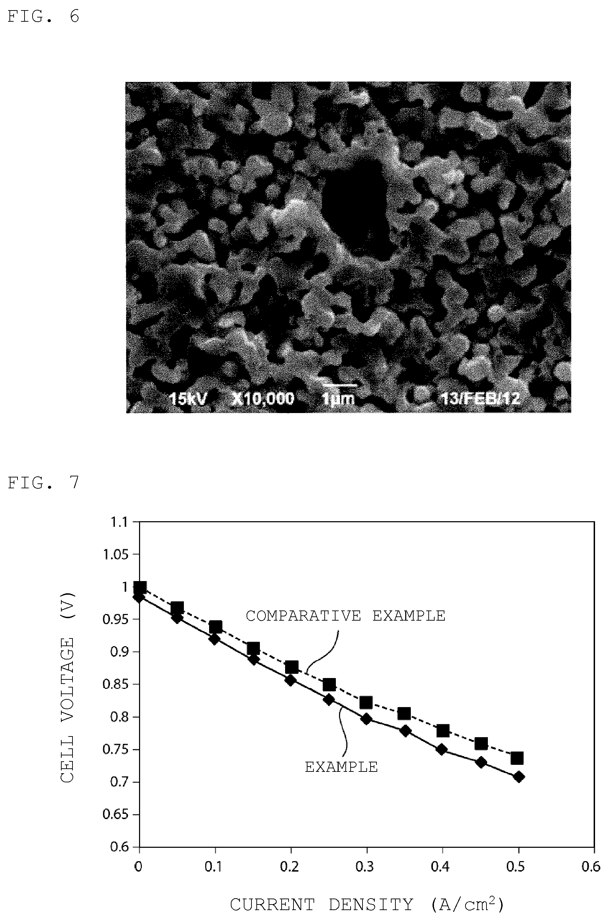

In contrast, FIG. 6 is an electron micrograph showing the surface condition of the conductive paste using the LSM powder of 11 m$^2$/g in specific surface area, which is obtained when the paste is subjected to treatment at the loading heat treatment temperature. As is clear from FIG. 6, it is determined that in this case, sintering has proceeded significantly, thereby causing necking to proceed.

It is to be noted that the necking indicates that powders are melted in series with each another, and thus integrated without keeping the shapes of the original powders or particles.

In the present embodiment, the conductive material layers 13a, 13b have not been sintered at the temperature adopted when the fuel cells 2, 2 are stacked and subjected to heat treatment as described above. The layers are half-baked. The layers also can enhance reliability in electrical connection.

When the height dimension of the joint material layer part with the metallic layer 11 disposed therein is slightly smaller, or equivalent, as compared with the height dimension of the joint layer part with the spacers 16a, 16b disposed therein, necking which proceeds significantly may cause a part of the electrically conductive path to be disconnected. In contrast, as described above, when necking proceeds hardly, or in a so-called half-baked case, the electrically conductive path is unlikely to be disconnected. Accordingly, reliability in electrical connection can be enhanced.

It is to be noted that the neck specific surface area ratio is desirably 10% or less. The neck specific surface area ratio is considered to refer to the proportion of a neck surface area referring to a part with particles integrated in series with each other to the surface area of the particles themselves in a field of view observed in an electron micrograph.

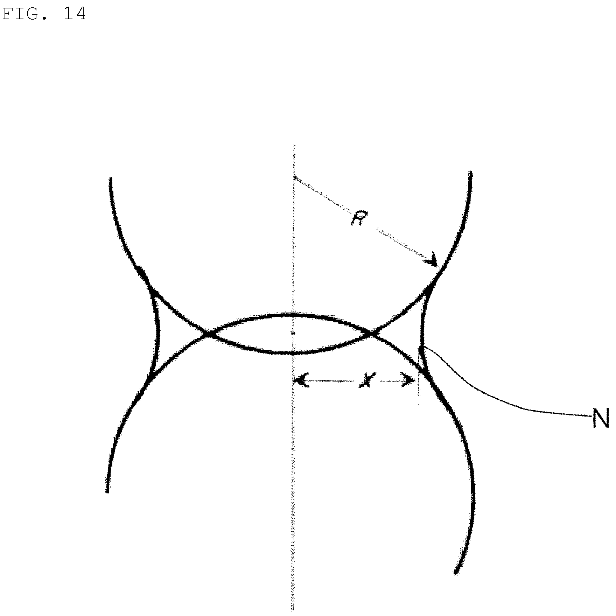

The neck surface area A can be represented by the following formula. It is to be noted that X and R in the following formula are considered to refer to symbols in a pattern diagram of a neck part as shown in FIG. 14. In FIG. 14, R represents a radius of a particle, and X refers to a dimension of a neck part N in a part with particles neighboring each other, along a direction orthogonal to the neighboring direction.

[Formula 1]

$$A \approx \frac{\pi^2 X^3}{2R}$$

The neck specific surface area ratios of LSMs shown in FIGS. 5 and 6 are as shown in Table 1.

[Table 1]

| | R (μm) | X (μm) | Neck Surface Area A (μm$^2$) | Neck Specific Surface Area Ratio |
|---|---|---|---|---|
| FIG. 5 | 0.16 | 0.04 | 0.01 | 5% |
| FIG. 6 | 0.26 | 0.16 | 0.08 | 13% |

In addition, there is a difference in coefficient of thermal expansion between the fuel cell 2 and the metallic layer 11.

With a thermal cycle during power generation, stress is caused by the difference in coefficient of thermal expansion. In this case, there is a possibility that the difference in coefficient of thermal expansion will cause peeling between the metallic layer 11 and the conductive material layers 13a, 13b and between the conductive material layers 13a, 13b and the fuel cell 2. However, in the present embodiment, stress is absorbed reliably, because the conductive material layers 13a, 13b are supposed to be half-baked fired body layers with a neck specific surface area ratio of 10% or less, and porous as described above. Accordingly, the layers can also suppress peeling.

As mentioned above, it is preferable to use a conductive ceramic including: the conductive material layers 13a, 13b composed of fired body layers with a neck specific surface area ratio of 10% or less, which have not been completely sintered; and the conductive layers 12a, 12b, 14a, 14b which have been completely sintered as dense layers. In this case, while the dense layers may be disposed at least one of between the fuel cell and the fired body layer with the neck specific surface area ratio of 10% or less and between the metallic layer and the fired body layer with the neck specific surface area ratio of 10% or less, it is preferable to dispose the dense layers at least between the fuel cell and the fired body layer with the neck specific surface area ratio of 10% or less. In each case, the fired body layers with the neck specific surface area ratio of 10% or less, which have not been completely sintered, can reliably bring the dense layers and the fuel cells and/or the metallic layer and the dense layers into close contact. It is to be noted that the dense layer herein which has been completely sintered refers to a fired body layer with a neck specific surface area ratio of 80% or more.

The fact that reliability in electrical connection can be enhanced according to the present embodiment as described above will be described with reference to specific experimental examples.

FIG. 7 is a diagram showing the relationship between the current density and voltage per stage of cell for a stage of fuel cell of a fuel cell stack obtained by stacking four fuel cells 2 according to an example as the embodiment described above and a single fuel cell as a comparative example.

It is to be noted that the fuel cell according to the comparative example was configured in the same way as a stage of cell of the fuel cell stack according to the example. In addition, the coefficients of thermal expansion for the materials used are as shown in Table 2 below.

[Table 2]

| Material | Temperature Range for Measurement of Coefficient of Thermal Expansion | Coefficient of Thermal Expansion |
|---|---|---|
| Ferrite-based Stainless Steel | 750°C | 12.0ppm/°C |
| Cell Constitution Member (zirconia) | 750°C | 10.5ppm/°C |
| La$_{0.8}$Sr$_{0.2}$MnO$_3$, | 0 - 1100°C | 12.4ppm/°C |

As is clear from FIG. 7, it is confirmed that power generation characteristics of the fuel cell stack according to the example are roughly comparable to those of the single cell.

Next, a method for manufacturing the fuel cell stack 1 will be described. In the manufacture of the fuel cell stack 1 according to the embodiment, a plurality of fuel cells 2 is prepared. Then, materials constituting the previously described joint part 4 are sandwiched between the fuel cells 2, 2. In this case, the conductive material layers 13a, 13b are composed of sheets including a calcined powder of the LSM described previously and a binder resin. In addition, the conductive layers 14a, 14b, 12a, 12b are composed of conductive paste layers mainly containing an LSM powder that is relatively large in specific surface area as described previously. It is to be noted that the specific surface area is adjusted with the calcination temperature.

The adhesive layers 15a to 15c composed of a glass ceramic are applied to both sides of the spacers 16a, 16b, and the respective members are stacked as shown in FIG. 1. In this condition, heat treatment for curing of the adhesive layers 15a to 15c composed of the glass ceramic is applied while applying a load in the stacking direction.

More specifically, the layers are kept for 2 hours at a temperature of 1000 to 1300°C. As a result, the adhesive layers 15a to 15c strongly join the fuel cells 2, 2 to each other. At the same time, curing of the conductive paste forms the conductive layers 12a, 12b, 14a, 14b. In this regard, the conductive paste is fired. On the other hand, the conductive material layers 13a, 13b are half-baked with the previously described neck specific surface area ratio of 10% or less.

In this way, the fuel cell stack 1 can be obtained.

A second embodiment of the present invention will be described. In a fuel cell stack according to the second embodiment, a metallic layer 11 is composed of, not a metallic plate, but a metallic mesh. The other configuration is the same as the first embodiment mentioned above, and the detailed descriptions thereof will be thus left out by incorporating the description of the first embodiment.

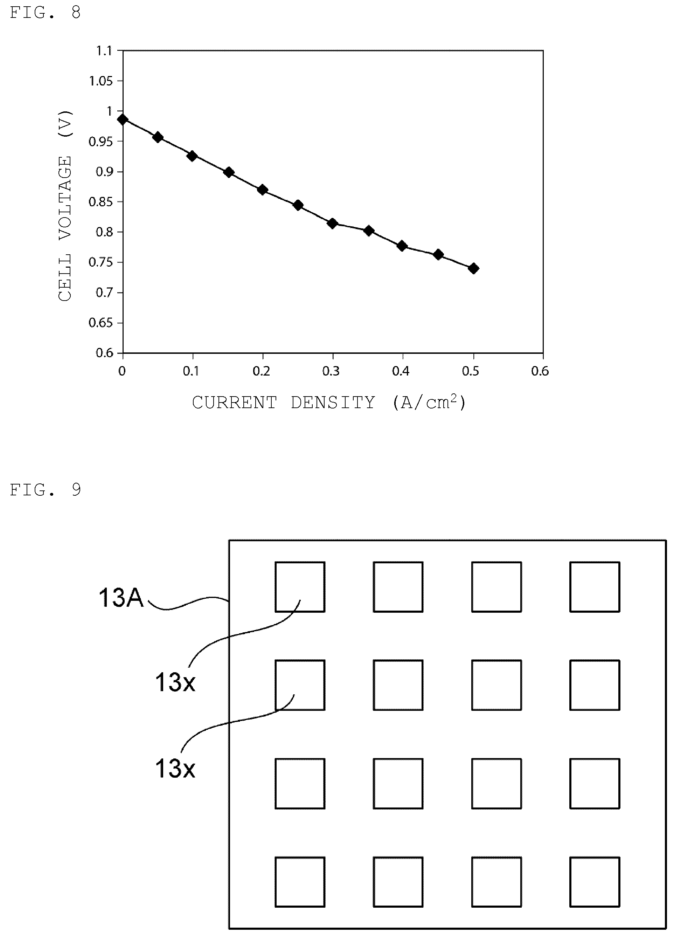

The metallic layer 11 may be composed of a metallic mesh. FIG. 8 is a diagram showing the relationship between the current density and voltage per stage of cell for the fuel cell stack in the case of using a Pt mesh of 80 mesh and φ 0.076 mm for the metallic layer 11.

As is clear when the solid line in FIG. 8 is compared with the dashed line in FIG. 7, power generation characteristics have been exhibited which are comparable to those in the case of the single cell. As just described, as the metallic layer 11, a metallic mesh may be used, or a metallic foam or a porous metal may be used.

The case of using a metallic mesh, a metallic foam, or a porous metal can enhance the ability to follow stress caused when heat is applied, thereby further enhancing reliability in electrical connection.

FIG. 9 is a partially notched plan view of conductive material for use in a fuel cell stack according to a third embodiment of the present invention. A conductive material layer 13A has a grid-like shape as shown. Therefore, the layer has a plurality of through holes 13x. The conductive material layers 13a, 13b have a sheet-like shape in the first embodiment, but may have such a grid-like shape. Likewise, the conductive layers 12a, 12b, 14a, 14b may also have a grid-like shape. Furthermore, the metallic layer 11 may also have the grid-like shape.

More specifically, in the part joining the power generation part 2b of the upper fuel cell 2 and the power generation part 2b of the lower fuel cell 2, the metallic layer, the conductive material layers, and the conductive layers are not necessarily required to have sheet-like shapes, but may have a shape such as a grid-like or mesh-like shape with a large number of voids, or have a shape with a large number of stripe parts provided in parallel. More specifically, as long as an electrical connection is ensured, the upper power generation part 2b and the lower power generation part 2b are not necessarily required to be entirely connected. In particular, the surface of the fuel cell 2 typically has asperity. Therefore, it may be rather desirable to configure the surface of the electrical connection part so as to have asperity. Therefore, a grid-like shape, etc. may be used as mentioned above.

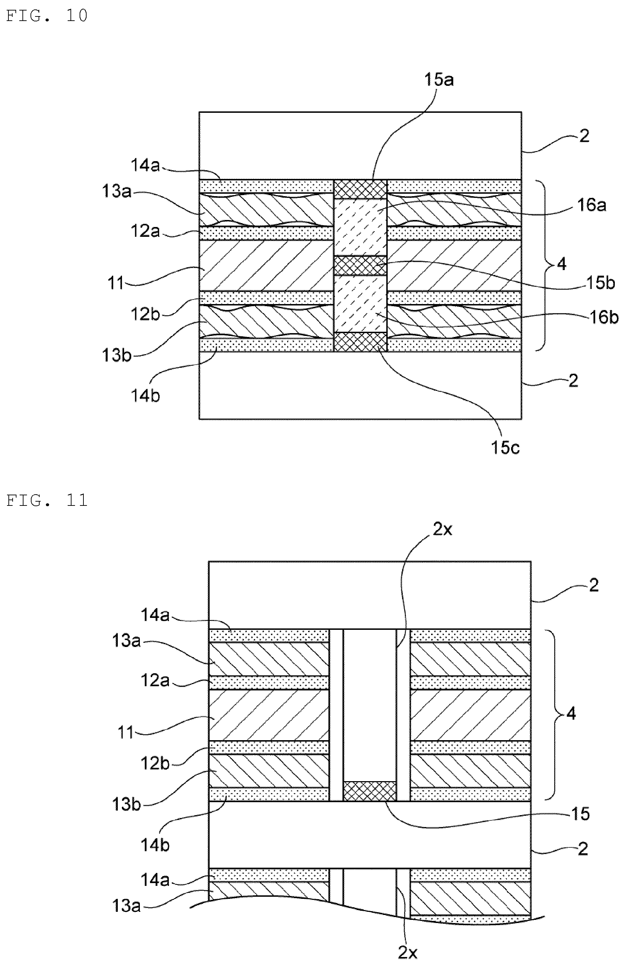

Furthermore, as in a fourth embodiment as shown in FIG. 10, the principal surfaces of the conductive material layers 13a, 13b may be provided with asperity.

FIG. 11 is a schematic partially notched elevational cross-sectional view illustrating a fuel cell stack according to a fifth embodiment. The spacers 16a, 16b in the first embodiment are not provided in the present embodiment. Instead, an upper fuel cell 2 has a protrusion 2x extending downward. This protrusion 2x has a lower end surface joined to the upper surface of a lower fuel cell 2 with an adhesive layer 15. The lower fuel cell 2 also has a protrusion 2x protruding downward. As just described, for providing the joint between the fuel cells 2, 2, without using the spacers, the fuel cells 2 themselves may be provided with the protrusions 2x which function as spacers.

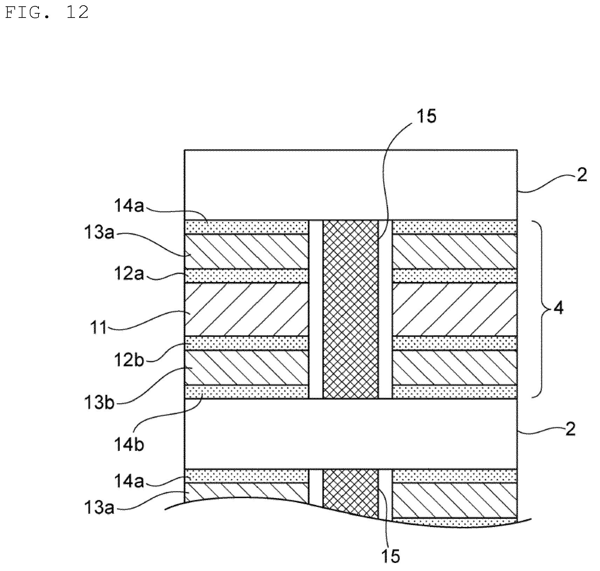

Furthermore, in a sixth embodiment as shown in FIG. 12, without providing the spacers 16a, 16b or protrusions 2x mentioned above, an upper fuel cell 2 and a lower fuel cell 2 are joined with an adhesive layer 15. As just described, the thickness of the adhesive layer 15 may be increased to omit the spacers.

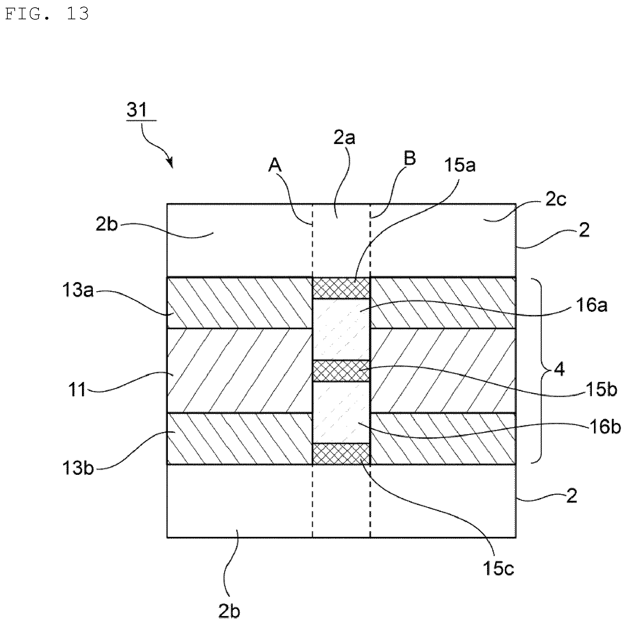

FIG. 13 is an elevational cross-sectional view illustrating a fuel cell stack according to a seventh embodiment of the present invention. The fuel cell stack 31 according to the seventh embodiment is configured in the same fashion as in the first embodiment, except that the conductive layers 12a, 12b and conductive layers 14a, 14b shown in FIG. 1 are not provided. More specifically, a fuel cell 2 and a metallic layer 11 are joined with a conductive material layer 13a.

Likewise, the metallic layer 11 and a fuel cell 2 are joined with a conductive material layer 13b.

The conductive material layers 13a, 13b are composed of a ceramic material which has not been sintered as mentioned previously. Therefore, the conductive material layers 13a, 13b are half-baked fired body layers which have not been sintered, and thus reliably brought into close contact with the metallic layer 11 and the fuel cells 2 through loading heat treatment, even when the previously described conductive layers 12a, 12b, 14a, 14b are not used. More specifically, the conductive material layers 13a, 13b are joined by joining through the loading heat treatment, so as to fit in well with the surface geometry of the fuel cells 2 and the metallic layer 11. Therefore, the reliability in electrical connection in the joint part is enhanced adequately. As just described, the conductive layers 12a, 12b, 14a, 14b mentioned above are not necessarily provided in the present invention.

DESCRIPTION OF REFERENCE SYMBOLS

| 1 | fuel cell stack |
|---|---|
| 2 | fuel cell |
| 2a | flow passage constitution part |
| 2b to 2e | power generation part |
| 2x | protrusion |
| 4 | joint part |
| 5 | separator |
| 5a, 5b | through hole |
| 5c | interconnector |
| 6 | fuel electrode layer |
| 6a, 6b | slit |
| 7 | solid oxide electrolyte layer |
| 7a, 7b | through hole |
| 8 | air electrode layer |
| 8a, 8b | slit |
| 9 | separator |
| 9a, 9b | through hole |
| 9c | interconnector |
| 11 | metallic layer |
| 12a, 12b | conductive layer |
| 13a, 13b, 13A | conductive material layer |
| 13x | through hole |
| 14a, 14b | conductive layer |
| 15, 15a to 15 | cadhesive layer |
| 16a, 16b | spacer |
| 31 | fuel cell stack |

**Claims**

1. A solid oxide fuel cell stack comprising a structure with a plurality of fuel cells stacked, the solid oxide fuel cell stack comprising:

    a plurality of solid oxide fuel cells stacked;
    a metallic layer disposed between one of the fuel cells and the other in a part with the fuel cells stacked one another;
    a conductive material disposed between the metallic layer and the fuel cell to electrically connect the metallic layer and the fuel cell; and
    an adhesive layer comprising an adhesive cured product, which joins the plurality of fuel cells in a region other than a region with the metallic layer and conductive material provided.

2. The solid oxide fuel cell stack according to claim 1, wherein the adhesive cured product is cured and shrunk.

3. The solid oxide fuel cell stack according to one of claims 1 and 2, wherein the conductive material comprises a conductive ceramic or a metal.

4. The solid oxide fuel cell stack according to claim 3, wherein the conductive material comprises a porous conductive ceramic.

5. The solid oxide fuel cell stack according to claim 4, wherein the conductive ceramic is a fired body layer with a neck specific surface area ratio of 10% or less, which has not been completely sintered.

6. The solid oxide fuel cell stack according to claim 5, wherein the conductive ceramic comprises a completely sintered dense layer and the fired body layer with the neck specific surface area ratio of 10% or less, which has not been completely sintered.

7. The solid oxide fuel cell stack according to claim 6, wherein the dense layer is disposed at least one of between the fuel cell and the fired body layer with the neck specific surface area ratio of 10% or less and between the metallic layer and the fired body layer with the neck specific surface area ratio of 10% or less.

8. The solid oxide fuel cell stack according to one of claims 6 and 7, wherein the dense layer is disposed at least between the fuel cell and the fired body layer with the neck specific surface area ratio of 10% or less.

9. The solid oxide fuel cell stack according to any one of claims 3 to 8, wherein the conductive ceramic is at least one conductive ceramic selected from the group consisting of $LaSrMnO_3$, $LaSrCoO_3$, $LaSrCoFeO_3$, $MnCoO_3$, $SmSrCoO_3$, $LaCaMnO_3$, $LaCaCoO_3$, $LaCaCoFeO_3$, $LaNiFeO_3$, and $(LaSr)_2NiO_4$.

10. The solid oxide fuel cell stack according to any one of claims 1 to 9, wherein the metallic layer has a plate-like shape.

11. The solid oxide fuel cell stack according to any one of claims 1 to 10, wherein the metallic layer comprises a metallic material with a plurality of holes.

12. The solid oxide fuel cell stack according to claim 11, wherein the metallic layer is a metallic mesh.

13. The solid oxide fuel cell stack according to any one of claims 1 to 12, wherein the conductive material comprises a metallic material containing a metal element constituting the metallic layer.

14. The solid oxide fuel cell stack according to any one of claims 10 to 13, wherein the conductive material comprises one metallic material selected from the group consisting of a metallic mesh, a metallic foam, and a porous metal.

15. A method for manufacturing a solid oxide fuel cell stack, the method comprising the steps of:

preparing a plurality of fuel cells; and
bonding the plurality of fuel cells by sandwiching, between the fuel cells adjacent to each other in a stacking direction, a metallic layer and a pair of conductive materials disposed on both sides of the metallic layer, along with a cured and shrunk adhesive in a region other than a region with the metallic layer provided.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

## INTERNATIONAL SEARCH REPORT

| International application No. |
|---|
| PCT/JP2014/074570 |

A. CLASSIFICATION OF SUBJECT MATTER
*H01M8/24(2006.01)i, H01M8/02(2006.01)i, H01M8/12(2006.01)i*

According to International Patent Classification (IPC) or to both national classification and IPC

B. FIELDS SEARCHED

Minimum documentation searched (classification system followed by classification symbols)
H01M8/24, H01M8/02, H01M8/12

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2013/012058 A1 (Murata Mfg. Co., Ltd.),<br>24 January 2013 (24.01.2013),<br>paragraphs [0036] to [0075], [0105], [0116];<br>fig. 1, 12<br>(Family: none) | 1-3,10-15<br>4-9 |
| X<br>Y<br>A | JP 2007-157352 A (Kyocera Corp.),<br>21 June 2007 (21.06.2007),<br>paragraphs [0070] to [0075]; fig. 6<br>(Family: none) | 1-4,10,11,15<br>9-12<br>5-8,13,14 |
| Y | JP 2004-265742 A (Kyocera Corp.),<br>24 September 2004 (24.09.2004),<br>paragraphs [0008], [0038] to [0048]<br>(Family: none) | 9-12 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>27 October, 2014 (27.10.14) | Date of mailing of the international search report<br>04 November, 2014 (04.11.14) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2014/074570 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2011-134538 A  (Kyocera Corp.),<br>07 July 2011 (07.07.2011),<br>paragraphs [0048] to [0061]; fig. 2<br>(Family: none) | 9-12 |
| A | JP 2010-73631 A  (Nissan Motor Co., Ltd.),<br>02 April 2010 (02.04.2010),<br>paragraphs [0009] to [0011], [0034] to [0040];<br>fig. 3, 4<br>(Family: none) | 1-15 |
| A | WO 2012/128307 A1  (Murata Mfg. Co., Ltd.),<br>27 September 2012 (27.09.2012),<br>paragraphs [0027] to [0044]<br>& US 2014/0017587 A1    & CN 103443978 A | 1-15 |

Form PCT/ISA/210 (continuation of second sheet) (July 2009)

**EP 3 051 617 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010038869 A
- JP 2006310005 A